# EUROPÄISCHE PATENTSCHRIFT

(11) **EP 0 759 864 B1**
(45) Veröffentlichungstag und Bekanntmachung des Hinweises auf die Patenterteilung: **06.09.2000**
(21) Anmeldenummer: 96908064.7
(22) Anmeldetag: 19.03.1996
(51) Int. Cl.: B60T 8/36, F16K 31/06, F16K 27/08

(54) **ELEKTROMAGNETVENTIL MIT DRUCKBEGRENZUNGSFUNKTION, INSBESONDERE FÜR HYDRAULISCHE KRAFTFAHRZEUG-BREMSANLAGEN MIT SCHLUPFREGELUNG UND/ODER AUTOMATISCHEM BREMSENEINGRIFF ZUR FAHRDYNAMIKREGELUNG**
PRESSURE-LIMITING ELECTROMAGNETIC VALVE, IN PARTICULAR FOR HYDRAULIC MOTOR VEHICLE BRAKING SYSTEMS WITH DRIVE SLIP REGULATION AND/OR AUTOMATIC BRAKING TO ACHIEVE DRIVE DYNAMIC REGULATION
SOUPAPE ELECTROMAGNETIQUE A FONCTION DE LIMITATION DE LA PRESSION, NOTAMMENT POUR SYSTEMES HYDRAULIQUES DE FREINAGE DE VEHICULES A MOTEUR A ANTIDERAPEUR AUTOMATIQUE ET/OU A ACTIONNEMENT AUTOMATIQUE DES FREINS PERMETTANT DE REGLER LA DYNAMIQUE DE CONDUITE

(30) Priorität: 22.03.1995 DE 19510288
(43) Veröffentlichungstag der Anmeldung: 05.03.1997
(73) Patentinhaber: Continental Teves AG & Co. oHG, 60488 Frankfurt (DE)
(72) Erfinder: BRAUM, Wolfgang, D-61273 Wehrheim 1 (DE)
(86) Internationale Anmeldenummer: EP9601162
(87) Internationale Veröffentlichungsnummer: WO9629219

(56) Entgegenhaltungen:
- EP-A- 0 538 600
- WO-A-92/13741
- DE-A- 4 028 447
- DE-A- 4 030 424
- DE-A- 4 030 971
- DE-A- 4 129 638
- DE-A- 4 141 546

## Beschreibung

Die Erfindung betrifft ein Elektromagnetventil mit Druckbegrenzungsfunktion, insbesondere für hydraulische Kraftfahrzeugbremsanlagen mit Schlupfregelung und/oder automatischem Bremseneingriff zur Fahrdynamikregelung, nach dem Oberbegriff des Anspruchs 1.

Ein Elektromagnetventil mit Druckbegrenzungsfunktion gemäß der gattungsbildenden Art geht bereits aus der DE 40 28 447 A1 hervor. Dieses Elektromagnetventil vereinigt die Funktionen zur Druckmittelsteuerung zwischen einem Bremsdruckgeber und einer Radbremse mit der Begrenzung des Systemdrucks im Sinne eines hydraulisch betätigbaren Druckbegrenzungs-ventils während einer Antriebsschlupfregelung. Zur Verringerung des Geräuschverhaltens ist der Ventilstößel innerhalb einer Stößelführung gegenüber dem Ventilsitz zentriert. Hierzu ist die Stößelführung am Ventilsitz angeordnet. Dies hat jedoch den Nachteil, daß sowohl Maßnahmen zur Befestigung der Stößelführung im Ventilgehäuse vorgesehen werden müssen als auch einen zusätzlichen Herstellungsaufwand zur Fertigung der Stößelführung besteht. Außerdem ist das Strömungsverhalten im Bereich des Ventilsitzes beeinträchtigt.

Aus der DE-A-41 29 638 ist bereits ein Elektromagnetventil mit einer Druckbegrenzungsfunktion bekannt geworden, dessen in Ventilschließrichtung federbeaufschlagtes Ventilschließglied in einem mit geringem Radialspiel versehenen Führungskörper angeordnet ist, der den das Ventilschließglied begrenzenden Gehäusebereich von einem die Feder aufweisenden Gehäusebereich trennt. Das in der Ventiloffenstellung am Ventilschließglied entlangströmende Druckmittel wird durch die engtolerierte Passung und Form gebung des Führungskörper in Richtung eines das Ventilgehäuse durchdringenden Querkanals ablenkt.

Daher ist es die Aufgabe der Erfindung, ein Elektromagnetventil der eingangs genannten Art dahingehend zu verbessern, daß mit geringem Herstellungsaufwand eine vorteilhafte Führung des Ventilstößels zustande kommt, die über dies hinsichtlich der Akustik des Elektromagnetventils sich durch geringste Schallemission auszeichnet und keinen negativen Einfluß auf das Strömungsverhalten nimmt.

Diese Aufgabe wird erfindungsgemäß durch die kennzeichnenden Merkmale des Patentanspruchs 1 gelöst.

Weitere Merkmale und Vorteile der Erfindung ergeben sich aus den Unteransprüchen sowie aus der nachfolgenden Beschreibung eines Ausführungsbeispiels anhand einer Zeichnung.

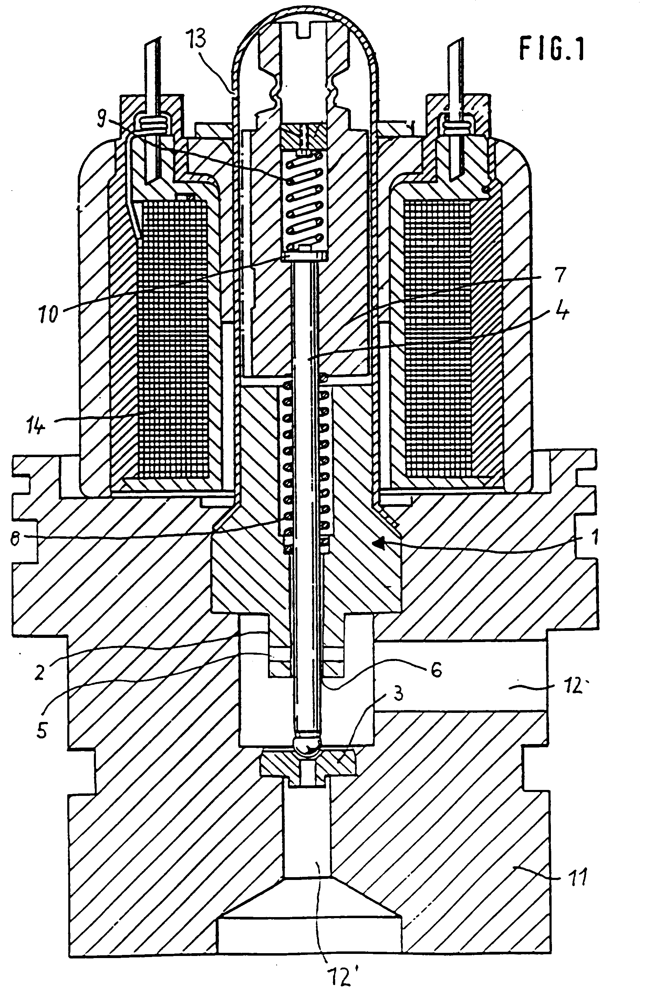

Die Figur 1 zeigt im Querschnitt ein Elektromagnetventil in der elektromagnetisch nicht erregten offenen Ventilschaltstellung. Der Magnetkern 1 ist mit der relativ dünnwandig aus austenitischem Stahl gezogenen Ventilhülse 13 im Ventilgehäuse 11 verstemmt gehalten, die eine Magnetspule 14 aufnimmt. Eine zwischen dem Magnetkern 1 und dem Magnetanker 7 eingespannte Rückstellfeder 8 sorgt für das Abheben des Ventilstößels 4 vom Ventilsitz 3 in der elektromagnetisch nicht erregten Grundstellung. Eine in einer koaxialen Stufenbohrung des Magnetankers 7 angeordnete Druckbegrenzungsfeder 9 hält den Ventilstößel 4 in der Grundstellung des Ventils an seinem Anschlag 10 innerhalb des Magnetankers 7. Zwischen der Stirnfläche des Magnetankers 7 und des Magnetkerns 1 ist vorzugsweise eine nicht ferromagnetische Scheibe angeordnet, die jedoch in der Abbildung nicht weiter herausgestellt ist, die jedoch das unerwünschte und hinreichend bekannte Festkleben des Magnetankers 7 am Magnetkern 1 während der elektromagnetischen Betätigung verhindert. Das Ventilgehäuse 11 ist in Patronenbauweise angefertigt und besteht aus Automatenstahl, so daß es entsprechend seiner Gehäuseabstufung kraft- und/oder formschlüssig, beispielsweise in einem Leichtmetallventilaufnahmekörper, gehalten werden kann. Der auf Höhe des Ventilstößels 4 in das Ventilgehäuse 11 radial einmündende erste Druckmittelkanal 12 steht vorzugsweise mit einem Bremsdruckgeber in Verbindung, während unterhalb des Ventilsitzes 3 gelegen ein zweiter Druckmittelkanal 12' in das Ventilgehäuse 11 einmündet. Aus der Abbildung geht hervor, daß erfindungsgemäß am Magnetkern 1 ein Fortsatz 2 vorgesehen ist, der sich in Richtung auf den Ventilsitz 3 erstreckt. Der Fortsatz 2 ist vorzugsweise als Hülse ausgeführt und einstückig mit dem Magnetkern 1 verbunden. Somit können beide Teile miteinander vereinigt als einfach herzustellendes Drehteil in einem einzigen Montagevorgang in das Ventilgehäuse 11 eingesetzt werden. An der Mantelfläche des Fortsatzes 2 sind über den Umfang symmetrisch verteilt Durchbrüche 5 vorgesehen, die auf einfache fertigungstechnische Weise durch Bohren hergestellt werden können. Die lichte Weite dieser als Bohrlöcher ausgeführten Durchbrüche 5 ist zumindest gleich oder größer als die den Ventilstößel 4 aufnehmende Durchgangsöffnung 6 im Fortsatz 2. Die als symmetrisch über den Umfang am Fortsatz 2 verteilten Bohrlöcher (Durchbrüche 5) befinden sich etwa auf halber Länge des Fortsatzes 2. Die Länge des Fortsatzes 2 beträgt zumindest ein viertel der Gesamtlänge des Magnetkerns 1, wobei die Gesamtlänge des Magnetkerns 1 die Länge des Fortsatzes 2 beinhaltet. Durch die gewählte Gesamtlänge des Magnetkerns ergibt sich eine im Verhältnis zur Länge des Ventilstößels 4 erforderliche Führungslänge, die in Abhängigkeit von der Spielpassung zwischen der Durchgangsöffnung 6 und dem Schaftquerschnitt des Ventilstößels 4 im begrenzten Umfange variiert werden kann. Die gewählte Spielpassung als auch die Gesamtlänge des Magnetkerns 1 nehmen Einfluß auf die Reibverhältnisse, Viscositäts- und Strömungseigenschaften während der Schaltoperation des Ventils. Da die vorbeschriebene Gesamtlänge des Magnetkerns 1 als auch das zu berücksichtigende Ringspaltmaß zwischen Magnetkern 1 und dem Ventilstößel 4 hinsichtlich der Akustik des Ventils keine nachteiligen Erscheinungen hervorrufen sollen, weist das Elektromagnetventil an seinem Fortsatz in diametraler Anordnung mehrere der vorbeschriebenen Durchbrüche 5 auf. Damit ist sichergestellt, daß das vom Druckmittelkanal 12' zum ersten Druckmittelkanal 12 strömende Fluid in der Druckbegrenzungsfunktion keine hochfrequenten im Hörschallbereich gelegene Geräusche erzeugt, die sich u.a. als Resonanzerscheinung durch die Ringspaltströmung zwischen dem Magnetkern 1 und dem Ventilstößel 4 einstellen würden.

Nachfolgend wird die Funktionsweise des vorgestellten Elektromagnetventils beschrieben. Durch die elektromagnetische Erregung des Magnetankers 7 gelangt der Ventilstößel 4 entgegen der relativ schwachen Wirkung der Rückstellfeder 8 im Magnetkern 1 zur Anlage am Ventilsitz 3. Dabei hebt sich der Ventilstößel 4 vorzugsweise um ein geringes Hubmaß vom Anschlag 10 im Magnetanker 7 ab, so daß auch bei Verschleißerscheinungen zwischen Ventilstößel 4 und Ventilsitz 3 jederzeit in der elektromagnetischen Ventilschließstellung ein dichtes Verschließen der Druckmittelverbindung zwischen dem ersten und zweiten Druckmittelkanal 12, 12' gewährleistet ist. Sobald sich unterhalb des Ventilsitzes 3 im zweiten Druckmittelkanal 12' ein Druckanstieg abzeichnet, der die Druckkraftwirkung der Druckbegrenzungsfeder 9 im Magnetanker 7 übersteigt, so beginnt die Druckbegrenzungsfunktion des Elektromagnetventils wirksam zu werden, indem sich der Ventilstößel 4 relativ zum Magnetanker 7 im Sinne einer Freigabe des Ventilsitzes 3 bewegt, wodurch Fluid des Druckmittelkanals 12' sich impulsartig in Richtung des Magnetkerns 1 und des ersten Druckmittelkanals 12 bewegt. Begünstigt wird dies durch die Tatsache, daß vor dem Ansprechen der Druckbegrenzerfunktion der erste Druckmittelkanal 12 sowie der Magnetankerraum nahezu drucklos sind. Die hierdurch geförderte Dynamik der Drucksäule pflanzt sich sodann über den kleinen Ringspaltquerschnitt zwischen dem Fortsatz 2 und dem Ventilstößel 4 in Richtung des Magnetankerraums fort. Dabei strömt jedoch auch Druckmittel über die Durchbrüche 5 im Fortsatz 2. Das ansonsten bekannte hochfrequente Pfeifgeräusch im Elektromagnetventil läßt sich somit aus dem üblichen Frequenzspektrum des Hörbereichs verlagern, wenn die konstruktiven Abmessungen des Fortsatzes 2 dies verlangen.

### Bezugszeichenliste

- 1: Magnetkern
- 2: Fortsatz
- 3: Ventilsitz
- 4: Ventilstößel
- 5: Durchbruch
- 6: Durchgangsöffnung
- 7: Magnetanker
- 8: Rückstellfeder
- 9: Druckbegrenzungsfeder
- 10: Anschlag
- 11: Ventilgehäuse
- 12, 12': Druckmittelkanal
- 13: Ventilhülse
- 14: Magnetspule

## Patentansprüche

1. Elektromagnetventil mit Druckbegrenzungsfunktion, für hydraulische Kraftfahrzeugbremsanlagen mit Schlupfregelung und/oder automatischem Bremseneingriff zur Fahrdynamikregelung, das einen von einer Ventilhülse (13) umschlossenen Magnetanker (7) aufweist, der in Abhängigkeit einer strombeaufschlagbaren, an der Ventilhülse (13) angebrachten Magnetspule (14) eine Hubbewegung vollzieht, so daß ein im Magnetanker (7) angeordneter und von einem Magnetkern (1) teilumschlossener Ventilstößel (4) mit einem in einem Ventilgehäuse (11) befestigten Ventilsitz (3) zusammenwirken kann, wobei die in Abhängigkeit von der elektromagnetischen Stellkraft vollziehbare Hubbewegung des Ventilstößels (4) durch Einwirkung einer hydraulischen Stellkraft relativ beweglich zum Magnetanker (7) veränderbar ist, mit einem im Bereich des Ventilstößels (4) in das Ventilgehäuse (11) einmündenden ersten Druckmittelkanal (12), der eine Verbindung zu einem Bremsdruckgeber herstellt, sowie mit einem abgewandt vom Ventilstößel (4) in das Ventilgehäuse (11) einmündenden zweiten Druckmittelkanal (12'), der mit einer Pumpe und wenigstens einer Radbremse in Verbindung steht und der in Abhängigkeit von der Stößelstellung mit dem ersten Druckmittelkanal (12) verbindbar ist, **gekennzeichnet** durch folgende Merkmale:
- am Magnetkern (1) ist ein hülsenförmiger, sich in Richtung auf den Ventilsitz (3) erstreckender Fortsatz (2) vorgesehen, der einstückig mit dem Magnetkern (1) verbunden ist,
- der Ventilstößel (4) ist in radialer Richtung im Fortsatz (2) geführt, der an seiner Mantelfläche einen Durchbruch (5) aufweist,
- der Durchbruch (5) ist während einer Druckbegrenzungsfunktion über einen zwischen dem Fortsatz (2) und dem Ventilstößel (4) gelegenen Ringspaltquerschnitt fluidisch durchströmt, sobald sich der Ventilstößel (4) relativ zum Magnetanker (7) im Sinne einer Freigabe des Ventilsitzes (3) bewegt.

2. Elektromagnetventil nach Anspruch 1, **dadurch gekennzeichnet**, daß der hülsenförmige Fortsatz (2) eine Durchgangsöffnung (6) aufweist, die der Durchgangsöffnung des Magnetkerns (1) entspricht.

3. Elektromagnetventil nach Anspruch 1, **dadurch gekennzeichnet**, daß symmetrisch verteilt über den Umfang des Fortsatzes (2) mehrere Durchbrüche (5) angeordnet sind.

4. Elektromagnetventil nach Anspruch 1, **dadurch gekennzeichnet**, daß die lichte Weite des Durchbruchs (5) zumindest gleich oder größer ist als eine Durchgangsöffnung (6) im Fortsatz (2).

5. Elektromagnetventil nach Anspruch 1, **dadurch gekennzeichnet**, daß der Durchbruch (5) etwa auf halber Länge des Fortsatzes (2) gelegen ist.

6. Elektromagnetventil nach Anspruch 5, **dadurch gekennzeichnet**, daß die Länge des Fortsatzes (2) mindestens ein viertel der Gesamtlänge des Magnetkerns (1) beträgt.

## Claims

1. Electromagnetic valve with a pressure-limiting function for hydraulic automotive vehicle brake systems with slip control and/or automatic brake intervention for driving dynamics control, including a magnetic armature (7) that is enclosed by a valve sleeve (13) and executes a stroke movement in dependence on an energizable magnetic coil (14) fitted to the valve sleeve (13) in such a manner that a valve tappet (4), that is arranged in the magnetic armature (7) and partly embraced by a magnetic core (1), can cooperate with a valve seat (3) attached in a valve housing (11), wherein the stroke movement of the valve tappet (4), movable in relation to the magnetic armature (7), that is adapted to be executed in dependence on the electromagnetic adjusting force is variable by the action of a hydraulic adjusting force, including a first pressure fluid channel (12) which opens into the valve housing (11) proximate the valve tappet (4) and establishes a connection to a braking pressure generator, and including a second pressure fluid channel (12') which opens into the valve housing (11) remote from the valve tappet (4) and is in connection to a pump and at least one wheel brake and which is connectable to the first pressure fluid channel (12) in dependence on the position of the tappet,
**characterized** by the following features:
- provided on the magnetic core (1) is a sleeve-shaped extension (2) which extends in the direction of the valve seat (3) and is connected integrally with the magnetic core (1),
- the valve tappet (4) is guided in a radial direction in the extension (2) which has an aperture (5) on its peripheral surface,
- during a pressure-limiting function, the aperture (5) is penetrated by fluid through an annular slot cross-section arranged between the extension (2) and the valve tappet (4) as soon as the valve tappet (4) moves relative to the magnetic armature (7) to the end of releasing the valve seat (3).

2. Electromagnetic valve as claimed in claim 1,
**characterized** in that the sleeve-shaped extension (2) has a through-opening (6) which corresponds to the through-opening of the magnetic core (1).

3. Electromagnetic valve as claimed in claim 1,
**characterized** in that a plurality of apertures (5) are spread symmetrically over the circumference of the extension (2).

4. Electromagnetic valve as claimed in claim 1,
**characterized** in that the inside width of the aperture (5) is at least equal to, or larger than, a through-opening (6) in the extension (2).

5. Electromagnetic valve as claimed in claim 1,
**characterized** in that the aperture (5) is arranged roughly at half length of the extension (2).

6. Electromagnetic valve as claimed in claim 5,
**characterized** in that the length of the extension (2) amounts to at least one fourth of the total length of the magnetic core (1).

## Revendications

1. Soupape électromagnétique à fonction de limitation de pression, pour des systèmes de freinage de véhicule automobile hydrauliques à régulation anti-patinage et/ou à actionnement de freins automatique en vue d'une régulation de la dynamique du mouvement, qui comporte un induit d'aimant (7) entouré par une douille de soupape (13), cet induit effectuant un mouvement de levage en fonction d'une bobine d'excitation (14) qui peut être soumise à un courant et qui est disposée sur la douille de soupape (13), de sorte qu'un poussoir de soupape (4), disposé dans l'induit d'aimant (7), et entouré partiellement par un noyau d'aimant (1) peut coopérer avec un siège de soupape (3) fixé dans un boîtier de soupape (11), le mouvement de levage du poussoir de soupape (4), poussoir qui est mobile relativement à l'induit d'aimant (7), ce mouvement pouvant être effectué en fonction de la force de réglage électromagnétique, étant modifiable sous l'action d'une force de réglage hydraulique, la soupape comprenant un premier conduit d'agent de pression (12) qui débouche dans le boîtier de soupape (11) dans la zone du poussoir de soupape (4) et qui établit une liaison avec une source de pression de freinage, ainsi qu'un deuxième conduit d'agent de pression (12') qui débouche dans le boîtier de soupape (11) détourné du poussoir de soupape (4), qui est en liaison avec une pompe et avec au moins un frein de roue et qui peut cure raccordé au premier conduit d'agent de pression (12) en fonction de la position du poussoir, caractérisé par les caractéristiques suivantes :
- sur le noyau d'aimant (1), il est prévu un prolongement (2) en forme de douille qui s'étend dans le sens du siège de soupape (3) et qui est relié d'un seul tenant avec le noyau d'aimant (1) ;
- le poussoir de soupape (4) est guidé selon la direction radiale dans le prolongement (2), ce dernier comportant un ajour (5) dans sa surface latérale ;
- du fluide passe à travers l'ajour (5), pendant un fonctionnement de limitation de pression, par l'intermédiaire d'une section de passage annulaire située entre le prolongement (2) et le poussoir de soupape (4), dès que le poussoir de soupape (4) se déplace relativement par rapport à l'induit d'aimant (7) en vue d'une libération du siège de soupape (3).

2. Soupape électromagnétique selon la revendication 1, caractérisé en ce que le prolongement en forme de douille (2) comporte une ouverture de passage (6) qui correspond à l'ouverture de passage du noyau d'aimant (1).

3. Soupape électromagnétique selon la revendication 1, caractérisé en ce que plusieurs ajours (5) sont répartis de façon symétrique sur la circonférence du prolongement (2).

4. Soupape électromagnétique selon la revendication 1, caractérisé en ce que la largeur de l'ajour (5) est au moins égale ou supérieure à une ouverture de passage (6) ménagée dans le prolongement (2).

5. Soupape électromagnétique selon la revendication 1, caractérisé en ce que l'ajour (5) est situé environ au milieu de la longueur du prolongement (2).

6. Soupape électromagnétique selon la revendication 5, caractérisé en ce que la longueur du prolongement (2) s'élève à au moins un quart de la longueur totale du noyau d'aimant (1).
